**Europäisches Patentamt**

**European Patent Office**

**Office européen des brevets**

(19)

(11) Veröffentlichungsnummer : **0 529 141 B1**

(12) # EUROPÄISCHE PATENTSCHRIFT

(45) Veröffentlichungstag der Patentschrift :
**08.03.95 Patentblatt 95/10**

(51) Int. Cl.⁶ : **H02M 3/335, H02M 3/337**

(21) Anmeldenummer : **91114665.2**

(22) Anmeldetag : **30.08.91**

(54) **Eingangsstromspitzen vermeidendes Schaltnetzteil mit sinusförmiger Stromaufnahme durch entsprechende Steuerung verwendeter Schaltelemente.**

(43) Veröffentlichungstag der Anmeldung :
**03.03.93 Patentblatt 93/09**

(45) Bekanntmachung des Hinweises auf die
Patenterteilung :
**08.03.95 Patentblatt 95/10**

(84) Benannte Vertragsstaaten :
**AT BE CH DE ES FR GB IT LI NL SE**

(56) Entgegenhaltungen :
**EP-A- 0 446 383
DE-A- 2 941 009
DE-A- 3 210 568
US-A- 4 245 286
US-A- 4 729 088
ELEKTRONIK. Bd. 4, 1978, MUNCHEN DE Seiten 102 - 107; J. WÜSTEHUBE: 'Gleichspan-
nungswandler für Schaltnetzteile'**

(73) Patentinhaber : **Siemens
NixdorfInformationssysteme
Aktiengesellschaft
Fürstenallee 7
D-33102 Paderborn (DE)**

(72) Erfinder : **Busch, Peter, Dipl.-Ing. (FH)
Flugfeldstrasse 16
W-8900 Augsburg (DE)**

(74) Vertreter : **Fuchs, Franz-Josef, Dr.-Ing. et al
Postfach 22 13 17
D-80503 München (DE)**

## Beschreibung

Die Erfindung betrifft ein Eingangsstromspitzen vermeidendes Schaltnetzteil mit sinusförmiger Stromaufnahme durch entsprechende Steuerung verwendeter Schaltelemente gemäß den Merkmalen des Oberbegriffs des Anspruchs 1.

Durch den dem Eingangsnetzgleichrichter nachgeschalteten Eingangsspeicherkondensator eines Schaltnetzteils können sehr hohe Eingangsstromspitzen auftreten, da im Betrieb über den Eingangsnetzgleichrichter nur im Bereich der Eingangsscheitelspannung Nachladeströme fließen. Als Folge davon wird der Leistungsfaktor des Schaltnetzteils auf einen Wert von größenordnungsmäßig 0,4 bis 0,7 gedrückt. Ein weiteres Problem ist der plötzliche hohe Ladestrom beim Einstecken bzw. Einschalten des Schaltnetzteils bzw. beim Nachladen nach einem Ausfall der Eingangsnetzwechselspannung bzw. nach einem Einbruch derselben während des Betriebs des Schaltnetzteils. Je sinusähnlicher der Eingangsstrom des Schaltnetzteils ist, umso besser ist dessen Leistungsfaktor. Am günstigsten ist es, wenn der Eingangsstrom einen sinusförmigen Verlauf aufweist.

Zur Verbesserung des Leistungsfaktors wurden entweder schwere und teure Eingangsdrosseln verwendet oder eine aktive Oberwellenfilterung durch vorgeschaltete Hochsetzsteller mit einer Stromsteuerung über Multiplizierer durchgeführt. Der Nachteil ist, daß trotz des hohen Aufwandes keine Netztrennung gegeben ist und daß die Eingangsstromspitzen beim Einstecken bzw. Einschalten des Schaltnetzteils immer noch vorhanden sind. Um diese zu reduzieren, werden Heißleiter als Vorwiderstände oder Vorwiderstände, die im Betrieb durch z.B. Triac-Bauteile oder Relais-Kontakte überbrückt sind, verwendet. Bei kurzen Netzeinbrüchen sind diese jedoch wirkungslos.

Zur Vermeidung der hohen Eingangsstromspitzen wurden auch sogenannte Null-Spannungsschalter entwickelt, die aber ebenfalls sehr aufwendig sind.

Aus der europäischen Patentanmeldung mit der Anmeldungsnummer 90 104 536.9 ist ein Eingangsstromspitzen vermeidendes Schaltnetzteil mit sinusförmiger Stromaufnahme durch entsprechende Steuerung verwendeter Schaltelemente bekannt, für das ein geringer Aufwand benötigt wird, weil der Aufbau einfach ist. Nachteilig jedoch ist, daß die Steuerung der verwendeten Schaltelemente, beispielsweise die eines Kurzschlußschalters, kompliziert ist, weil z.B. bei der Erzeugung des Steuersignals für den Kurzschlußschalter die Notwendigkeit besteht, verschiedene Spannungsbereiche bei einer Eingangsspannung berücksichtigen zu müssen.

Aus der DE-29 41 009 ist daneben ein Verfahren zum Regeln oder Stellen der Ausgangsspannung eines fremdgesteuerten Gleichspannungswandlers bekannt, bei dem aber ebenfalls eine komplizierte Steuerung der verwendeten Schaltelemente durchgeführt wird.

Aufgabe der Erfindung ist es deshalb, ein Schaltnetzteil der vorbeschriebenen Art so zu verbessern, daß die Steuerung der verwendeten Schaltelemente einfach ist.

Diese Aufgabe wird bei einem Schaltnetzteil der eingangs genannten Art durch die Merkmale des kennzeichnenden Teils des Anspruchs 1, 6 oder 7 gelöst. Ein derartiges Schaltnetzteil weist folgende Vorteile auf: Keine Eingangsstromspitzen; das Schaltnetzteil ist netztrennend; der Eingangsstrom ist sinusförmig, weshalb der Leistungsfaktor des Geräts besonders gut ist, der Mittelwert der Ausgangsgleichspannung ist unabhängig von der angeschlossenen Last und der Eingangsnetzwechselspannung und die Steuerung der verwendeten Schaltelemente, insbesondere die Erzeugung des Steuersignals für den Kurzschlußschalter ist einfach, weil keine Spannungsbereiche einer Eingangsspannung mehr berücksichtigt werden müssen. Weitere Vorteile sind, daß in einigen Fällen wenigstens ein Bauteil wegfällt, wodurch das Schaltnetzteil billiger wird und mit geringeren Abmessungen konstruiert werden kann. Da es sich bei den Eingangsspeicherkondensatoren meist um relativ große Bauteile handelt, wird selbst dann Platz eingespart, wenn die Ausgangskondensatoren, die in der Regel bereits vorhanden sind, in einer vergrößerten Version eingesetzt werden.

Nachfolgend werden mehrere Ausführungsbeispiele der Erfindung anhand der Zeichnung näher erläutert. Dabei zeigen:

FIG 1      ein Prinzipschaltbild eines Schaltnetzteils mit sinusförmiger Stromaufnahme gemäß der Erfindung,

FIG 2 - 5      Prinzipschaltungen von Durchflußwandlern für einen Spannungsregler nach FIG 1,

FIG 6      einen qualitativen Stromverlauf des Eingangsstroms eines Schaltnetzteils nach FIG 1 und

FIG 7      eine Tafel mit Schaubildern vom Schaltverhalten der bei den verschiedenen Durchflußwandlern gemäß der FIG 2 bis 5 verwendeten Schaltern.

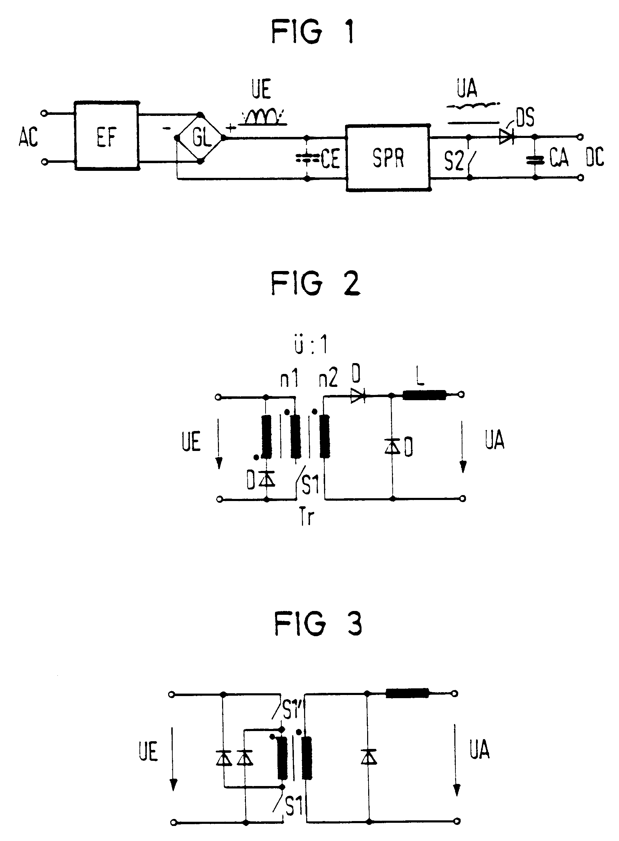

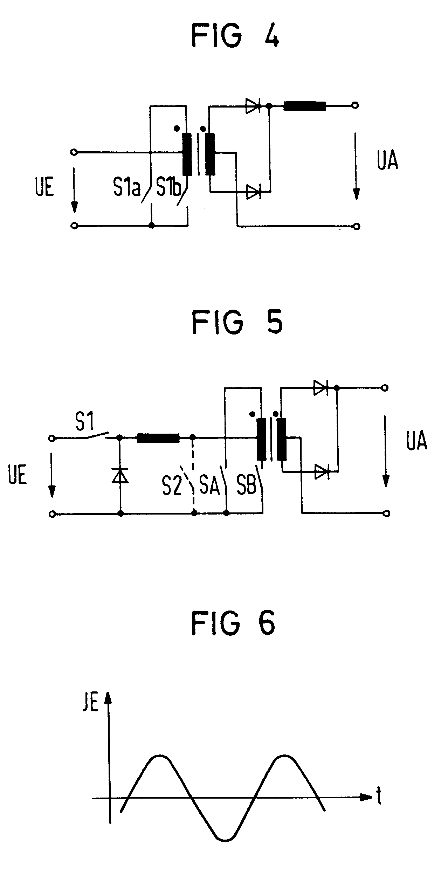

Das in der FIG 1 dargestellte Schaltnetzteil weist ein Eingangsfilter EF, daran angeschlossen einen Eingangsnetzgleichrichter GL, an diesen angeschlossen einen Spannungsregler SPR und diesem wiederum nachfolgend einen Kurzschlußschalter S2 mit einer in einem Ausgangslängszweig vor dem Ausgangskondensator CA angeordneten und in Richtung Ausgang gepolten Kurzschlußsicherungsdiode DS sowie einen zwischen den Ausgangsklemmen angeordneten Ausgangskondensator CA auf. Das Schaltnetzteil ist an eine Eingangsnetzwechselspannung AC angeschlossen, aus der die stabilisierte Ausgangsgleichspannung DC gewonnen wird.

Die Eingangsnetzwechselspannung AC kann beispielsweise Scheitelwerte von ca. 120 bis 370 Volt annehmen. Gemäß dem Ausführungsbeispiel wird nur eine Ausgangsgleichspannung DC, z.B. 12 Volt, ausgegeben. Sollen gleichzeitig mehrere Ausgangsgleichspannungen ausgegeben werden, sind entsprechende Ausgangskreise innerhalb des Spannungsreglers SPR vorzusehen.

Das Eingangsfilter EF filtert Störungen der Eingangsnetzwechselspannung AC und des Schaltnetzteils heraus. Der Eingangsnetzgleichrichter GL richtet die Eingangsnetzwechselspannung AC gleich und erzeugt unter der Annahme, daß ein Zweiweggleichrichter verwendet wird, eine pulsierende Eingangsgleichspannung UE, wie sie in der FIG skizzenhaft angedeutet ist. Der Spannungsregler SPR regelt die Eingangsgleichspannung UE zu einer geregelten Ausgangsgleichspannung UA entsprechend einem vorgegebenen Mittelwert. Der Verlauf der Ausgangsgleichspannung UA ist in der FIG skizzenhaft angegeben. Die Ausgangsgleichspannung UA weist systembedingt noch eine Restwelligkeit auf. Der Kurzschlußschalter S2 ermöglicht die Aufrechterhaltung des sinusförmigen Eingangsstroms unabhängig von der Amplitude der Eingangsspannung. Die Kurzschlußsicherungsdiode DS verhindert ein Entladen des Ausgangskondensators CA, wenn der Kurzschlußschalter S2 geschlossen ist. Der Ausgangskondensator CA reduziert die Größe der Restwelligkeit. Durch Vergrößern des Ausgangskondensators CA wird gleichzeitig die Restwelligkeit verkleinert. Ein Vorteil des Vergrößerns des Ausgangskondensators CA liegt ferner darin, daß bei Ausfall der Eingangsnetzwechselspannung AC die Ausgangsgleichspannung DC länger nutzbringend am Ausgangskondensator CA abgegriffen werden kann.

Bei dem Spannungsregler SPR handelt es sich um einen nach dem Durchflußwandler-Prinzip arbeitenden DC/DC-Wandler, der in Abhängigkeit vom Augenblickswert der dem Schaltnetzteil zugeführten sinusförmigen Eingangsnetzwechselspannung schnell getaktet und so ausgebildet ist, daß eine proportional zur Eingangsspannung geregelte Stromaufnahme und eine aktive Strombegrenzung durch Begrenzung des Regelbereichs stattfindet und zwischen dessen Eingang und Ausgang eine Netztrennung besteht. Spannungsregler, die für eine solche Anwendung geeignet sind, sind an sich bekannt. Vom Prinzip her könnte es sich beispielsweise um einen 1-Transistor-Eintakt- , einen 2-Transistor-Eintakt-, einen Gegentakt- oder um einen stromgespeisten Gegentaktdurchflußwandler handeln. Die Taktfrequenz ist sehr viel größer als die Wechselfrequenz der sinusförmigen Eingangsnetzwechselspannung AC. Sie beträgt für das Ausführungsbeispiel 50 kHz.

Gegenüber bekannten Schaltnetzteilen ist kein Eingangsspeicherkondensator CE zwischen dem Eingangsnetzgleichrichter GL und dem Spannungsregler SPR vorgesehen, weshalb dieser in der FIG nur gestrichelt gezeichnet ist. Der die unerwünschten Eingangsstromspitzen verursachende Eingangskondensator CE ist auf den Ausgang des Schaltnetzteils verlegt. Im Ausführungsbeispiel treten deshalb beim Laden bzw. Nachladen des Ausgangskondensators CA wegen der entsprechenden Steuerung des Eingangsstroms im Spannungsregler SPR keine Eingangsstromspitzen mehr auf. Dadurch wird der Leistungsfaktor des Schaltnetzteils verbessert.

Aus Gründen des Kompromisses, der zwischen der Größe des Ausgangskondensators CA und der Reduzierung der Restwelligkeit auf der Ausgangsgleichspannung DC bzw. der Möglichkeit der Aufrechthaltung der Ausgangsgleichspannung DC bei Ausfall der Eingangsnetzwechselspannung AC bzw. bei deren Einbruch zu schliessen ist, wird die Ausgangsgleichspannung DC noch eine, wenn auch geringe, Restwelligkeit aufweisen, doch spielt dies für viele Anwendungsfälle keine Rolle. Solche Anwendungsfälle sind z.B. das Betreiben von Halogenlampen, von Motoren, von Ladegeräten, von Leistungsendstufen, aber auch die Verwendung als Eingangsteil für batteriegepufferte Stromversorgungen für Datenverarbeitungsanlagen.

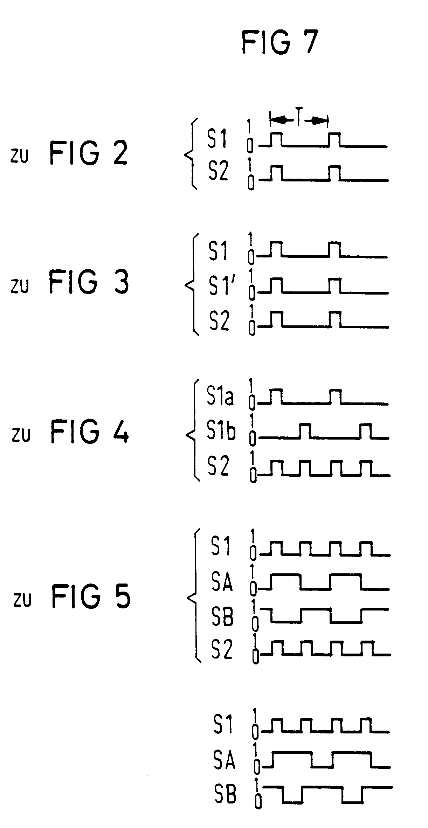

In den FIG 2 bis FIG 5 sind Prinzipschaltungen eines Durchflußwandlers für den in FIG 1 eingesetzten Spannungsregler SPR angegeben. Bei der in FIG 2 dargestellten Prinzipschaltung handelt es sich dabei um einen 1-Transistor-Eintaktdurchflußwandler mit einem getakteten Schalter S1. Die in FIG 3 dargestellte Prinzipschaltung zeigt einen 2-Transistor-Eintaktdurchflußwandler mit zwei getakteten Schaltern S1 und S1'. Bei der in FIG 4 dargestellten Prinzipschaltung handelt es sich um einen Gegentaktdurchflußwandler mit zwei getakteten Schaltern S1a und S1b. Bei der in FIG 5 dargestellten Prinzipschaltung schließlich handelt es sich um einen stromgespeisten Gegentaktdurchflußwandler mit drei getakteten Schaltern S1, SA und SB. Alle Prinzipschaltungen sind an sich bekannt (siehe beispielsweise ELEKTRONIK 1978, Heft 4, Seiten 102 - 104).

Die einzelnen Durchflußwandler weisen neben den genannten Schaltern noch jeweils Dioden D, Übertrager Tr und Drosseln L auf, die der Einfachheit halber nur in FIG 2 bezeichnet sind. Da eine sehr hohe Taktfrequenz die Schalter S steuert, weisen die Übertrager kleine Abmessungen auf.

Allgemein errechnet sich die Ausgangsspannung UA der Durchflußwandler aus der Formel:

$$UA = UE \cdot l/ü \cdot v_T$$

UE ist die Eingangsspannung des Spannungsreglers SPR bzw. des darin enthaltenen Durchflußwandlers. ü ist das Übersetzungsverhältnis des Übertragers Tr, das sich aus dem Verhältnis der Windungszahlen, z.B.

n1 und n2, der Wicklungen des Übertragers ergibt. $v_T$ schließlich ist das Tastverhältnis der getakteten Schalter S, das das Zeitverhältnis zwischen offenem und geschlossenem Zustand eines Schalters während einer Periodendauer T (FIG 7) angibt. $V_{Tmax}$ hängt vom Auf- und Abmagnetisierungsverhalten des Übertragers Tr ab und kann Werte von 50 bis 100 % annehmen.

Unter der Annahme, daß die Ausgangsspannung UA konstant ist, ergibt sich bei einem maximalen Tastverhältnis $V_{Tmax}$ eine minimale Eingangsspannung UEmin für den jeweiligen Durchflußwandler gemäß der Formel:

$$UEmin = UA \cdot ü/v_{Tmax}$$

Die minimale Eingangsspannung UEmin ist diejenige Eingangsspannung, bei der der Durchflußwandler gerade noch als solcher arbeitet. Das heißt, daß unterhalb der minimalen Eingangsspannung UEmin kein Eingangsstrom fließt. Aus der obigen Formel für die minimale Eingangsspannung UEmin ergibt sich, daß die Ausgangsspannung UA kurzgeschlossen werden muß, damit unterhalb der minimalen Eingangsspannung UEmin noch ein Strom fließt. Der Kurzschluß wird von dem Kurzschlußschalter S2 (FIG 1) bewerkstelligt. Der Kurzschlußschalter S2 schaltet gleichzeitig mit vorgegebenen Schaltern des Durchflußwandlers. Bei entsprechender Steuerung der Schalter S, die im Zusammenhang mit der FIG 7 näher erläutert wird, existiert diese Grenze für die minimale Eingangsspannung UEmin nicht mehr und es fließt ein sinusförmiger Eingangsstrom IE, wie er qualitativ in der FIG 6 angegeben ist.

In FIG 7 sind für die verschiedenen Durchflußwandler gemäß der FIG 2 bis FIG 5 Schaubilder vom Schaltverhalten der jeweils verwendeten Schalter S dargestellt. Links neben den Schaubildern steht die Figurenbezeichnung des jeweils zugehörigen Durchflußwandlers. Das unterste, nicht bezeichnete Schaubild ist einem Schaltnetzteil nach FIG 1 mit einem Durchflußwandler nach FIG 5 zugeordnet, bei dem der Kurzschlußschalter S2 durch entsprechendes Schalten der vorhandenen Schalter S von diesen ersetzt wird. Allen Schaubildern ist gemeinsam, daß sich zwar die Tastverhältnisse der Schalter S abhängig vom Augenblickswert der Eingangsspannung UE ändern, nicht aber deren Schaltzeitpunkte im Verhältnis zueinander. Das gilt für den gesamten Schwankungsbereich der Eingangsspannung UE. Es gibt keine Spannungsgrenze nach unten. Das Schaltnetzteil arbeitet somit kontinuierlich.

Den jeweils an den linken Seiten der Kurven in FIG 7 angegebenen Bezeichnungen 1 und 0 sind folgende Bedeutungen zugeordnet:

1: der betreffende Schalter ist eingeschaltet

0: der betreffende Schalter ist ausgeschaltet.

Die Tastverhältnisse ändern sich, wie schon erwähnt, mit den Augenblickswerten der Eingangsspannung UE entsprechend stufenlos. Da die Eingangsspannung UE die gleichgerichtete Eingangsnetzwechselspannung AC ist, ändert sich die Eingangsspannung UE entsprechend der Änderung der Augenblickswerte der sinusförmigen Eingangsnetzwechselspannung AC. Qualitativ werden deshalb die Tastverhältnisse der betreffenden Schalter S entsprechend der Eingangsnetzwechselspannung AC geändert.

Im einzelnen erfolgt die Steuerung der Schalter S der nach FIG 2 bis 5 verschieden möglichen Durchflußwandler jeweils in Kombination mit dem Kurzschlußschalter S2 wie nachfolgend in Verbindung mit der FIG 7 beschrieben:

Bei der Verwendung eines 1-Transistor-Eintaktdurchflußwandlers nach FIG 2 schaltet der Kurzschlußschalter S2 gleichzeitig mit dem Schalter S1 ein und aus. Die Drossel L des 1-Transistor-Eintaktdurchflußwandlers magnetisiert während der Einschaltphase auf. Beim Abmagnetisieren während der Ausschaltphase wird der Abmagnetisierungsstrom der Drossel L in den Ausgangskondensator CA geleitet.

Bei der Verwendung eines 2-Transistor-Eintaktdurchflußwandlers nach FIG 3 schalten die Schalter S1 und S1' sowie der Kurzschlußschalter S2 jeweils gleichzeitig ein und aus. Die Funktion der Schalter S ist dabei analog denen bei der Verwendung eines 1-Transistor-Eintaktdurchflußwandlers nach FIG 2.

Wird ein Gegentaktdurchflußwandler nach FIG 4 verwendet, schaltet der Kurzschlußschalter S2 sowohl mit dem Schalter S1a als auch mit dem Schalter S1b jeweils gleichzeitig ein und aus.

Bei der Verwendung eines stromgespeisten Gegentaktdurchflußwandlers nach FIG 5 schaltet der Schalter S1 mit dem Kurzschlußschalter S2 gleichzeitig ein und aus, während die Schalter SA und SB abwechselnd mit einem Tastverhältnis von 50 % und gegenüber den Schaltern S1 und S2 halber Taktfrequenz schalten.

Der Kurzschlußschalter S2 kann beim stromgespeisten Gegentaktwandler eingespart werden. Das ist dann möglich, wenn die vorhandenen Schalter S1, SA und SB in der Weise geschaltet werden, daß, wie im letzten, nicht bezeichneten Schaubild der FIG 7 gezeigt, der Schalter S1 abwechselnd gleichzeitig mit den Schaltern SA und SB schaltet, die um eine Periodenlänge des Schalters S1 versetzt einschalten und jeweils nochmals um die Einschaltdauer des Schalters S1 verzögert ausschalten. Das heißt, bei einem ersten Einschalten des Schalters S1 schaltet der Schalter SA ein, und bei einem ersten Ausschalten des Schalters S1 schaltet der Schalter SB aus. Bei einem zweiten Einschalten des Schalters S1 schaltet der Schalter SB ein, und bei einem zweiten Ausschalten des Schalters S1 schaltet der Schalter SA aus. Dieser Vorgang wird dann fortwährend wiederholt. Dabei durchläuft der Schalter S1 abhängig vom Augenblickswert der Eingangsspannung UE ein Tastverhältnis von 0 bis 100 % und die Schalter SA und SB durchlaufen ein Tastverhältnis von 50 bis 100 %.

Im ersten beschriebenen Fall erfolgt die Steuerung des Schalters S2 einfach mit dem Schalter S1. Im zweiten beschriebenen Fall erfolgt die Steuerung des Schalters S2 einfach entweder mit dem Schalter S1 oder mit dem Schalter S1'. Im dritten beschriebenen Fall erfolgt die Steuerung des Schalters S2 einfach durch eine ODER-Verknüpfung der Steuersignale der Schalter S1a und S1b. Im vierten beschriebenen Fall erfolgt die Steuerung des Schalters S2 einfach mit dem Schalter S1 und im fünften beschriebenen Fall erfolgt die Steuerung des Schalters S2 und die Aufrechterhaltung der Schaltverhältnisse zueinander einfach durch ODER-Verknüpfung der Steuersignale der jeweiligen Schalter S1, SA und SB. Insgesamt kann damit die Steuerung des Kurzschlußschalters S2 einfach bewerkstelligt werden.

Durch das überlappende Schalten der Schalter SA und SB bei gleichzeitig eingeschaltetem Schalter S1 wird die Drossel L kurzzeitig mit dem Massepotential des Schaltnetzteils verbunden. In dieser Zeit wird Energie in die Drossel geladen und zwar mit der vollen Eingangsspannung UE. In der Zeit, in der der Schalter S1 ausgeschaltet ist, wird die Abmagnetisierungsenergie der Drossel L über die Schalter SA oder SB und den Übertrager Tr in den Ausgangskreis übertragen. Dabei ist es unerheblich, ob der Drosselstrom trapez- oder dreieckförmig ist. In beiden Fällen kann eine sinusförmige Stromaufnahme erzielt werden. Beim trapezförmigen Drosselstrom kann dies dadurch erreicht werden, daß der Mittelwert des Schaltstroms gemäß der Kurvenform der Eingangsspannung UE gesteuert wird. Bei dreieckförmigem Drosselstrom kann die sinusförmige Stromaufnahme dadurch bewerkstelligt werden, daß das Tastverhältnis über mindestens eine Netzhalbwelle der Eingangsnetzwechselspannung AC konstant gehalten wird. Das Tastverhältnis kann aber auch sehr langsam verändert werden. Die hieraus resultierende Verzerrung der Kurvenform des Eingangsstroms kann dabei noch vernachlässigt werden.

Den bisher beschriebenen Fällen ist zugrundegelegt, daß der Kurzschlußschalter S2 dem Durchflußwandler nachgeschaltet ist. In einem weiteren Ausführungsbeispiel kann der Kurzschlußschalter S2 aber auch auf der Primärseite des stromgespeisten Durchflußwandlers angeordnet sein. Beispielsweise kann er vor dem im Durchflußwandler eingesetzten Übertrager Tr (in FIG 5 gestrichelt gezeichnet) angeordnet sein, wobei er einerseits mit einem Mittelabgriff der primären Übertragerwicklung verbunden und andererseits auf Masse bezogen angeschlossen ist. Der Vorteil der Anordnung des Kurzschlußschalters S2 an dieser Stelle liegt beispielsweise darin, daß der Kurzschlußschalter S2 zwar mehr mehr Spannung, dafür aber weniger Strom schalten muß und daß eine Kurzschlußsicherungsdiode DS, die verhindert, daß bei geschlossenem Kurzschlußschalter S2 der Ausgangskondensator CA kurzgeschlossen wird, entfällt. Die Steuerung des Tastverhältnisses des Kurzschlußschalters S2 erfolgt so, wie bei der Verwendung eines stromgespeisten Gegentaktdurchflußwandlers, bei dem der Kurzschlußschalter S2 nachgeschaltet ist.

## Patentansprüche

1. Eingangsstromspitzen vermeidendes Schaltnetzteil mit sinus-förmiger Stromaufnahme durch eine das Tastverhältnis betreffende entsprechende Steuerung der verwendeten Schaltelemente, bestehend im wesentlichen aus einem Eingangsgleichrichter (GL), einem nachgeschalteten Spannungsregler (SPR), der als in Abhängigkeit vom Augenblickswert einer dem Schaltnetzteil zugeführten sinusförmigen Eingangsnetzwechselspannung (AC) schnell getakteter und dabei den Eingangsstrom (IE) proportional zur Eingangsnetzwechselspannung (AC) regelnder, netztrennender Durchflußwandler mit aktiver Strombegrenzung ausgebildet ist, einem anstelle eines Eingangsspeicherkondensators gegebenenfalls vergrößerten Ausgangskondensator (CA) und einem Kurzschlußschalter (S2) zwischen den Ausgangsklemmen des Spannungsreglers (SPR) in Kombination mit einer in einem Ausgangslängszweig des Schaltnetzteils vor dem Ausgangskondensator (CA) angeordneten Kurzschlußsicherungsdiode (DS), **dadurch gekennzeichnet,** daß der Kurzschlußschalter (S2) derart getaktet ist, daß er über den gesamten Schwankungsbereich einer aus der gleichgerichteten Eingangsnetzwechselspannung (AC) gewonnenen Eingangsspannung (UE) gleichzeitig mit zugeordneten internen Schaltelementen des Spannungsreglers (SPR) ein- und ausschaltet.

2. Schaltnetzteil nach Anspruch 1, **dadurch gekennzeichnet,** daß der Durchflußwandler entsprechend dem Prinzip eines 1-Transistors-Eintaktdurchflußwandlers mit einem getakteten Schalter (S1) ausgebildet ist, und daß der Kurzschlußschalter (S2) mit dem getakteten Schalter (S1) des Durchflußwandlers gleichzeitig ein- und ausschaltet.

3. Schaltnetzteil nach Anspruch 1, **dadurch gekennzeichnet,** daß der Durchflußwandler entsprechend dem Prinzip eines 2-Transistor-Eintaktdurchflußwandlers mit zwei synchron getakteten Schaltern (S1,S1') ausgebildet ist, und daß der Kurzschlußschalter (S2) mit den beiden synchron getakteten Schaltern (S1,S1') des Durchflußwandlers gleichzeitig ein- und ausschaltet.

4. Schaltnetzteil nach Anspruch 1, **dadurch gekennzeichnet,** daß der Durchflußwandler entsprechend dem Prinzip eines Gegentaktdurchflußwandlers mit zwei wechselweise getakteten Schaltern (S1a,S1b) ausgebildet ist, und daß der Kurzschlußschalter (S2) im Tastverhältnisbereich der zwei wechselweise getakteten Schalter (S1a, S1b) jeweils kleiner 50 % mit jedem der beiden Schalter (S1a,S1b) gleichzeitig ein- und ausschaltet.

5. Schaltnetzteil nach Anspruch 1, **dadurch gekennzeichnet,** daß der Durchflußwandler entsprechend dem Prinzip eines stromgespeisten Gegentaktdurchflußwandlers mit einem Längs- und zwei Gegentaktschalter (S1,Sa, Sb) ausgebildet ist, von denen die Gegentaktschalter (SA,SB) zu jedem Einschaltzeitpunkt des Längsschalters (S1) mit einem Tastverhältnis von 50 % und gegenüber dem Längsschalter (S1) mit halber Taktfrequenz schalten, und daß der Kurzschlußschalter (S2) mit dem Längsschalter (S1) des Durchflußwandlers gleichzeitig ein- und ausschaltet.

6. Eingangsstromspitzen vermeidendes Schaltnetzteil mit sinusförmiger Stromaufnahme durch eine das Tastverhältnis betreffende entsprechende Steuerung verwendeter Schaltelemente, bestehend im wesentlichen aus einem Eingangsgleichrichter (GL), einem nachgeschalteten Spannungsregler (SPR), der als in Abhängigkeit vom Augenblickswert einer dem Schaltnetzteil zugeführten sinusförmigen Eingangsnetzwechselspannung (AC) schnell getakteter und dabei den Eingangsstrom (IE) proportional zur Eingangsnetzwechselspannung (AC) regelnder, netztrennender stromgespeister Gegentaktdurchflußwandler mit aktiver Strombegrenzung, einem Längs- und zwei Gegentaktschalter (S1,SA,SB) und einer dem Längsschalter (S1) nachgeschalteten Drossel ausgebildet ist, und einem anstelle eines Eingangsspeicherkondensators gegebenenfalls vergrößerten Ausgangskondensator (CA), **dadurch gekennzeichnet,** daß die Schalter (S1,SA,SB) über den gesamten Schwankungsbereich einer aus der Eingangsnetzwechselspannung (AC) gewonnenen Eingangsspannung (UE) derart getaktet sind, daß der Längsschalter (S1) und die Gegentaktschalter (SA,SB) während einer durch die Schwankung der Eingangsspannung (UE) vorgegebenen Zeitdauer gleichzeitig eingeschaltet sind.

7. Eingangsstromspitzen vermeidendes Schaltnetzteil mit sinusförmiger Stromaufnahme durch eine das Tastverhältnis betreffende entsprechende Steuerung verwendeteter Schaltelemente, bestehend im wesentlichen aus einem Eingangsgleichrichter (GL), einem nachgeschalteten Spannungsregler (SPR), der als in Abhängigkeit vom Augenblickswert einer dem Schaltnetzteil zugeführten sinusförmigen Eingangsnetzwechselspannung (AC) schnell getakteter und dabei den Eingangsstrom (IE) proportional zur Eingangsnetzwechselspannung (AC) regelnder, durch einen Ubertrager (Tr) netztrennender stromgespeister Gegentaktdurchflußwandler mit aktiver Strombegrenzung, einem Längs- und zwei Gegentaktschalter (S1,SA,SB) und einer dem Längsschalter (S1) nachgeschalteten Drossel ausgebildet ist, einem anstelle eines Eingangsspeicherkondensators gegebenenfalls vergrößerten Ausgangskondensator (CA) und einem auf Masse bezogenen primärseitig vor dem Übertrager (Tr) angeordneten Kurzschlußschalter (S2), **dadurch gekennzeichnet,** daß der Längsund die Gegentaktschalter (S1,SA,SB) über den gesamten Schwankungsbereich einer aus der Eingangsnetzwechselspannung (AC) gewonnene Eingangsspannung (UE) derart getaktet sind, die Gegentaktschalter (SA,SB) zu jedem Einschaltzeitpunkt des Längsschalters (S1) mit einem Tastverhältnis von 50 % und gegenüber dem Längsschalter (S1) mit halber Taktfrequenz schalten, und daß der Kurzschlußschalter (S2) mit dem Längsschalter (S1) des Durchflußwandlers gleichzeitig ein- und ausschaltet.

8. Schaltnetzteil nach einem der vorhergehenden Ansprüche, **dadurch gekennzeichnet,** daß die Taktfrequenz des Durchflußwandlers sehr viel größer ist als die Wechselfrequenz der sinusförmigen Eingangsnetzwechselspannung (AC).

## Claims

1. Switched-mode power supply avoiding input current surges, having sinusoidal current consumption by corresponding control, in a manner relating to the duty ratio, of the switching elements used, essentially comprising an input rectifier (GL), a downstream-connected voltage regulator (SPR) designed as a mains-isolating forward converter which has active current limitation, is fast-clocked as a function of the instantaneous valve of a sinusoidal input AC mains voltage (AC) which is fed to the switched-mode power supply, and at the same time regulates the input current (IE) in proportion to the input A-C mains voltage (AC), an output capacitor (CA), possibly enlarged instead of an input storage capacitor, and a short-circuit switch (S2) between the output terminals of the voltage regulator (SPR) in combination with a short-circuit protection diode (DS), arranged upstream of the output capacitor (CA) in a longitudinal output branch of the switched-mode power supply, characterized in that the short-circuit switch (S2) is clocked in such a manner that, over the entire fluctuation range of an input voltage (UE) obtained from the rectified input AC mains voltage (AC), it switches on and off simultaneously with associated internal switching elements of the voltage regulator (SPR).

2. Switched-mode power supply according to Claim 1, characterized in that the forward converter is designed according to the principle of a single-transistor single-ended forward converter with a clocked switch (S1), and in that the short-circuit switch (S2) switches on and off simultaneously with the clocked switch (S1) of the forward converter.

3. Switched-mode power supply according to Claim 1, characterized in that the forward converter is designed corresponding to the principle of a two-transistor single-ended forward converter with two synchronously clocked switches (S1, S1′), and in that the short-circuit switch (S2) switches on and off simultaneously with the two synchronously clocked switches (S1, S1′) of the forward converter.

4. Switched-mode power supply according to Claim 1, characterized in that the forward converter is designed corresponding to the principle of a push-pull forward converter with two alternately clocked switches (S1a, S1b), and in that the short-circuit switch (S2), in that duty ratio range of the two alternately clocked switches (S1a, S1b) which is in each case less than 50%, switches on and off simultaneously with each of the two switches (S1a, S1b).

5. Switched-mode power supply according to Claim 1, characterized in that the forward converter is designed corresponding to the principle of a current-fed push-pull forward converter with one longitudinal switch and two push-pull switches (S1, Sa, Sb), of which the push-pull switches (SA, SB) switch at each switching-on instant of the longitudinal switch (S1) with a duty ratio of 50% and, with respect to the longitudinal switch (S1), at half the clock frequency, and in that the short-circuit switch (S2) switches on and off simultaneously with the longitudinal switch (S1) of the forward converter.

6. Switched-mode power supply avoiding input current surges, having sinusoidal current consumption by corresponding control, in a manner relating to the duty ratio, of the switching elements used, essentially comprising an input rectifier (GL), a downstream-connected voltage regulator (SPR), designed as a mains-isolating current-fed push-pull forward converter which has active current limitation, is fast-clocked as a function of the instantaneous value of a sinusoidal input AC mains voltage (AC) which is fed to the switched-mode power supply, at the same time regulates the input current (IE) in proportion to the input AC mains voltage (AC) and has one longitudinal switch and two push-pull switches (S1, SA, SB) and an inductor connected downstream from the longitudinal switch (S1), and an output capacitor (CA), possibly enlarged instead of an input storage capacitor, characterized in that the switches (S1, SA, SB) are clocked over the entire fluctuation range of an input voltage (UE), obtained from the input AC mains voltage (AC), in such a manner that the longitudinal switch (S1) and the push-pull switches (SA, SB) are simultaneously switched on for a period of time predetermined by the fluctuation of the input voltage (UE).

7. Switched-mode power supply avoiding input current surges, having sinusoidal current consumption by corresponding control, in a manner relating to the duty ratio, of the switching elements used, essentially comprising an input rectifier (GL), a downstream-connected voltage regulator (SPR), designed as a current-fed push-pull forward converter, which is mains-isolating due to a transformer (Tr), has active current limitation, is fast-clocked as a function of the instantaneous valve of a sinusoidal input AC mains voltage (AC) which is fed to the switched-mode power supply, at the same time regulates the input current (IE) in proportion to the input AC mains voltage (AC) and has one longitudinal and two push-pull switches (S1, SA, SB) and an inductor connected downstream from the longitudinal switch (S1), an output capacitor (CA), possibly enlarged instead of an input storage capacitor, and a short-circuit switch (S2), arranged on the primary side upstream of the transformer (Tr) and connected to earth, characterized in that the longitudinal switch and the push-pull switches (S1, SA, SB) are clocked over the entire fluctuation range of

7

an input voltage (UE), obtained from the input AC mains voltage (AC), in such a manner that the push-pull switches (SA, SB) switch at each switching-on instant of the longitudinal switch (S1) with a duty ratio of 50% and, with respect to the longitudinal switch (S1), at half the clock frequency, and in that the short-circuit switch (S2) switches on and off simultaneously with the longitudinal switch (S1) of the forward converter.

8. Switched-mode power supply according to one of the preceding claims, characterized in that the clock frequency of the forward converter is very much higher than the alternating frequency of the sinusoidal input AC mains voltage (AC).

## Revendications

1. Alimentation à découpage empêchant les pics de courant d'entrée et à consommation de courant sinusoïdal, par une commande correspondante, qui concerne le rapport durée du passage du courant pendant une période/durée d'une période, d'éléments d'interruption utilisés, constituée essentiellement d'un redresseur (GL) d'entrée, d'un régulateur (SPR) de tension, qui est branché en aval et qui est constitué en tant que convertisseur de passage, à limitation active du courant, cadencé rapidement en fonction de la valeur instantanée d'une tension (AC) alternative sinusoïdale de secteur d'entrée envoyée à l'alimentation à découpage, réglant le courant (IE) d'entrée proportionnellement à la tension (AC) alternative de secteur d'entrée et isolant du secteur, d'un condensateur (CA) de sortie au lieu d'un condensateur de stockage d'entrée et éventuellement plus grand et d'un interrupteur (S2) de court-circuit entre les bornes de sortie du régulateur (SPR) de tension en combinaison avec une diode (DS) de protection contre les court-circuits disposée dans une branche longitudinale de sortie de l'alimentation à découpage en amont du condensateur (CA) de sortie, caractérisée en ce que l'interrupteur (S2) de court-circuit est cadencé, de telle sorte qu'il se ferme et s'ouvre sur toute l'amplitude de variation d'une tension (UE) d'entrée obtenue à partir de la tension (AC) alternative de secteur d'entrée redressée en même temps que des éléments d'interruption internes associés du régulateur (SPR) de tension.

2. Alimentation à découpage suivant la revendication 1, caractérisée en ce que le convertisseur de passage est constitué suivant le principe d'un convertisseur de passage asymétrique à un transistor comportant un interrupteur (S1) cadencé, et que l'interrupteur (S2) de court-circuit se ferme et s'ouvre en même temps que l'interrupteur (S1) cadencé du convertisseur de passage.

3. Alimentation à découpage suivant la revendication 1, caractérisée en ce que le convertisseur de passage est constitué suivant le principe d'un convertisseur de passage asymétrique à deux transistors comportant deux interrupteurs (S1, S1′) cadencés de façon synchrone, et que l'interrupteur (S2) de court-circuit se ferme et s'ouvre en même temps que les deux interrupteurs (S1, S1′) du convertisseur de passage cadencés de façon synchrone.

4. Alimentation à découpage suivant la revendication 1, caractérisée en ce que le convertisseur de passage est constitué suivant le principe d'un convertisseur de passage symétrique comportant deux interrupteurs (S1a, S1b) cadencés en alternance, et que l'interrupteur (S2) de court-circuit se ferme et s'ouvre en même temps que chacun des deux interrupteurs (S1a, S1b) pour les rapports durée du passage du courant pendant une période/durée d'une période des deux interrupteurs (S1a, S1b) cadencés en alternance, plus petits que 50%.

5. Alimentation à découpage suivant la revendication 1, caractérisée en ce que le convertisseur de passage est constitué suivant le principe d'un convertisseur de passage symétrique alimenté en courant et comportant un interrupteur longitudinal et deux interrupteurs symétriques (S1, Sa, Sb), parmi lesquels les interrupteurs (SA, SB) symétriques commutent avec un rapport durée du passage du courant pendant une période/durée d'une période de 50% et à une fréquence de cadence moitié de celle de l'interrupteur (S1) longitudinal, et que l'interrupteur (S2) de court-circuit se ferme et s'ouvre en même temps que l'interrupteur (S1) longitudinal du convertisseur de passage.

6. Alimentation à découpage empêchant les pics de courant d'entrée à consommation de courant sinusoïdal par une commande correspondante, qui concerne le rapport durée du passage du courant pendant une période/durée d'une période, d'éléments d'interruption utilisés, constituée essentiellement d'un redresseur (GL) d'entrée, d'un régulateur (SPR) de tension, qui est branché en aval, qui est constitué en tant que convertisseur de passage symétrique cadencé rapidement en fonction de la valeur instantanée d'une tension (AC) alternative sinusoïdale de secteur d'entrée envoyée à l'alimentation à découpage, réglant le courant (IE) d'entrée proportionnellement à la tension (AC) alternative du secteur d'entrée, isolant du secteur, alimenté en courant et ayant une limitation active du courant, un interrupteur longitudinal et deux interrupteurs symétriques (S1, SA, SB) et une bobine branchée en aval de l'interrupteur (S1) longitudinal, et d'un condensateur (CA) de sortie au lieu d'un condensateur de stockage d'entrée et éventuellement plus grand, caractérisée en ce que les interrupteurs (S1, SA, SB) sont cadencés sur toute l'amplitude de variation d'une tension (UE) d'entrée obtenue à partir de la tension (AC) alternative de secteur d'entrée, de telle sorte que l'interrupteur (S1) longitudinal et les interrupteurs (SA, SB) symétriques sont fermés en même temps pendant une durée prescrite par la variation de la tension (UE) d'entrée.

7. Alimentation à découpage empêchant les pics de courant d'entrée à consommation de courant sinusoïdal par une commande correspondante, qui concerne le rapport durée du passage du courant pendant une période/durée d'une période, d'éléments d'interruption utilisés, constituée essentiellement d'un redresseur (GL) d'entrée, d'un régulateur (SPR) de tension, qui est branché en aval, qui est constitué en tant que convertisseur de passage symétrique cadencé rapidement en fonction de la valeur instantanée d'une tension (AC) alternative sinusoïdale de secteur d'entrée envoyée à l'alimentation à découpage, réglant le courant (IE) d'entrée proportionnellement à la tension (AC) alternative du secteur d'entrée, isolant du secteur par un transformateur (Tr), alimenté en courant et ayant une limitation active du courant, un interrupteur longitudinal et deux interrupteurs symétriques (S1, SA, SB) et une bobine branchée en aval de l'interrupteur (S1) longitudinal, d'un condensateur (CA) de sortie au lieu d'un condensateur de stockage d'entrée et éventuellement plus grand et d'un interrupteur (S2) de court-circuit relié à la masse et disposé du côté primaire en amont du transformateur (Tr), caractérisée en ce que l'interrupteur longitudinal et les interrupteurs symétriques (S1, SA, SB) sont cadencés sur toute l'amplitude de variation d'une tension (UE) d'entrée obtenue à partir de la tension (AC) alternative de secteur d'entrée, de telle sorte que les interrupteurs (SA, SB) symétriques commutent à chaque instant de fermeture de l'interrupteur (S1) longitudinal à un rapport durée du passage du courant pendant une période/durée d'une période de 50% et à une fréquence de cadence moitié de celle de l'interrupteur (S1) longitudinal, et que l'interrupteur (S2) de court-circuit se ferme et s'ouvre en même temps que l'interrupteur (S1) longitudinal du convertisseur de passage.

8. Alimentation à découpage suivant l'une des revendications précédentes, caractérisée en ce que la fréquence de cadence du convertisseur de passage est beaucoup plus grande que la fréquence de la tension (AC) alternative sinusoïdale de secteur d'entrée.

# FIG 1

# FIG 2

# FIG 3

## FIG 4

## FIG 5

## FIG 6

## FIG 7

zu FIG 2

zu FIG 3

zu FIG 4

zu FIG 5